# EUROPÄISCHE PATENTSCHRIFT

(11) **EP 2 633 201 B1**
(45) Veröffentlichungstag und Bekanntmachung des Hinweises auf die Patenterteilung: **09.07.2014**
(21) Anmeldenummer: 11761526.0
(22) Anmeldetag: 24.08.2011
(51) Int. Cl.: F16B 31/02

(54) **LASTANZEIGENDE SCHEIBE**
LOAD-INDICATING WASHER
DISQUE INDICATEUR DE LA CHARGE

(30) Priorität: 29.10.2010 DE 102010043170
(43) Veröffentlichungstag der Anmeldung: 04.09.2013
(73) Patentinhaber: HILTI Aktiengesellschaft, 9494 Schaan (LI)
(72) Erfinder: APPL, Jörg, CH-9470 Buchs (CH); DIJKHUIS, Arjen Detmer, A-6800 Feldkirch (AT); SCHÄFFER, Marc, A-6800 Feldkirch-Nofels (AT); GOLDT, Mathias, A-6800 Feldkirch (AT); ECKSTEIN, Andreas, 86899 Landsberg am Lech (DE)
(86) Internationale Anmeldenummer: PCT/EP2011/064506
(87) Internationale Veröffentlichungsnummer: WO 2012/055600

(56) Entgegenhaltungen:
- WO-A1-2007/070933
- DE-B4- 10 316 632

## Beschreibung

Die Erfindung betrifft eine lastanzeigende Scheibe gemäss dem Oberbegriff des Anspruchs 1, mit einem Grundkörper und einem auf dem Grundkörper angeordneten Deckkörper, und zumindest einem Indikatorelement zum Anzeigen einer zwischen Grundkörper und Deckkörper wirkenden Axialkraft, welches zwischen Grundkörper und Deckkörper angeordnet ist. Eine derartige lastanzeigende Scheibe ist aus der DE 103 16 632 B4 benannt.

Beim Anbringen von Bolzen ist es häufig erforderlich, die Vorspannkraft definiert einzustellen. Dies kann beispielsweise mittels eines Drehmomentschlüssels erfolgen. Denn da in der Regel ein Zusammenhang zwischen dem Drehmoment und der Vorspannkraft besteht, kann aus dem aktuellen Drehmoment auf die aktuelle Vorspannung geschlossen werden.

Die Vorspannung kann aber auch direkt bestimmt werden, wobei eine sogenannte lastanzeigenden Scheibe, auch "Direct Tension indicator" (DTI) genannt, verwendet werden kann. Eine solche lastanzeigende Scheibe ist beispielsweise aus der DE 103 16 632 B4 bekannt. Die aus der DE 103 16 632 B4 bekannte Scheibe weist einen Indikator zur Kontrolle der am Schraubbolzen eingestellten Vorspannung auf, welcher durch Kapseln gebildet wird, die mit einem Farbstoff gefüllt sind. Der Farbstoff tritt bei einer vorgegebenen axialen Belastung aus der Scheibe aus und/oder wird am Rand der Scheibe sichtbar. Im Vergleich mit der indirekten Bestimmung über das Drehmoment kann durch die direkte Bestimmung der Vorspannung mittels einer lastanzeigenden Scheibe eine höhere Präzision erzielt werden, da der Zusammenhang zwischen dem Drehmoment und der Vorspannkraft Schwankungen unterworfen sein kann.

Es hat sich jedoch gezeigt, dass lastanzeigende Scheiben unter Umständen nicht zuverlässig funktionieren, wenn sie an Betonankern eingesetzt werden.

**Aufgabe** der Erfindung ist es, eine lastanzeigende Scheibe mit besonders hoher Zuverlässigkeit anzugeben.

Die Aufgabe wird erfindungsgemäss durch eine lastanzeigende Scheibe mit den Merkmalen des Anspruchs 1 gelöst. Bevorzugte Ausführungsbeispiele sind in den abhängigen Ansprüchen angegeben.

Die erfindungsgemässe lastanzeigende Scheibe ist dadurch gekennzeichnet, dass das Indikatorelement ein dilatantes Material aufweist. Insbesondere kann das Indikatorelement aus einem dilatanten Material bestehen.

Die Erfindung beruht auf der Erkenntnis, dass die Zuverlässigkeitsprobleme, welche bei der Verwendung lastanzeigender Scheiben im Zusammenhang mit Betonankern teilweise beobachtet wurden, auf den Vorgang des Einhämmerns zurückzuführen sind, der bei Betonankern in der Regel erforderlich ist. Beim Einhämmern wirken hohe Stosskräfte auf den Anker und dabei unter Umständen auch auf die lastanzeigende Scheibe. Diese Stosskräfte können die farbstoffgefüllten Kapseln, welche nach dem Stand der Technik als Sensoren, dienen, unter Umständen beschädigen oder zumindest schwächen. Dies kann wiederum zur Folge haben, dass der Farbstoff bereits vorzeitig austritt, so dass eine korrekte Kontrolle der Vorspannung beim Anziehen des Ankers nicht mehr möglich ist.

Hier setzt die Erfindung an und sieht ein Indikatorelement vor, welches aus einem dilatanten Material besteht. Ein solches dilatantes Material zeichnet sich dadurch aus, dass es einer Deformation widersteht, wenn eine Kraft über einen kurzen Zeitraum von z. B. weniger als 0.1 Sekunden angewandt wird, andererseits aber deformierbar ist, wenn die Kraft über einen längeren Zeitraum von beispielsweise mehr als 3 Sekunden wirkt. Damit kann das Indikatorelement aus dilatantem Material kurz andauernde Kräfte, wie sie bei Hammerschlägen auftreten, vom Deckkörper auf den Grundkörper ohne Deformation und somit ohne Einbussen in der Kraftübertragung weitergeben. Wirken die Kräfte hingegen über einen längeren Zeitraum, wie beispielsweise beim Vorspannen des Schraubbolzens, so gibt das dilatante Material nach und deformiert sich. Diese sichtbare Deformation wiederum kann als Nachweis für die eingestellte Vorspannung dienen.

Erfindungsgemäss wird somit ein Indikatorelement zur Verfügung gestellt, welches einerseits im Gegensatz zu Indikatorkapseln durch Hammerschläge nicht beeinträchtigt wird, so dass eine besonders gute Anzeigezuverlässigkeit gegeben ist, und welches andererseits die bei den Hammerschlägen auftretenden Kräfte weitestgehend ohne Beeinträchtigung weitergibt, so dass eine besonders hohe Zuverlässigkeit beim Einhämmern eines entsprechenden Betonankers gegeben ist.

Erfindungsgemäss können der Grundkörper und der Deckkörper jeweils eine Durchgangsöffnung aufweisen, wobei die beiden Durchgangsöffnungen zweckmässigerweise für einen axialen Durchgang eines Bolzens miteinander fluchten. Insbesondere kann vorgesehen sein, dass der Grundkörper und/oder der Deckkörper ringförmig ausgebildet sind.

Weiterhin ist es bevorzugt, dass das Indikatorelement als Ring ausgebildet ist, der zweckmässigerweise koaxial zu den beiden Durchgangsöffnungen angeordnet ist. Dies erlaubt eine besonders einfache und zuverlässige Fixierung des Indikatorelements und zugleich auch eine besonders gute Anzeigezuverlässigkeit.

Eine weitere zweckmässige Ausgestaltung der Erfindung liegt darin, dass der Grundkörper und/oder der Deckkörper eine ringförmige Scheibe aufweist. Hierdurch wird eine besonders kompakte Anordnung erhalten.

Ferner kann nach der Erfindung ein Anschlag vorgesehen sein, der eine axiale Bewegung des Deckkörpers zum Grundkörper hin und eine axiale Belastung des Indikatorelements begrenzt. Ein solcher Anschlag kann verhindern, dass das Indikatorelement bei besonders hohen Axialbelastungen beschädigt wird.

Besonders zweckmässig ist es, dass der Anschlag durch einen Anschlagring gebildet wird, der vom Grundkörper oder vom Deckkörper axial vorsteht. Ein solcher Anschlagring kann ausser als Anschlag auch zum Positionieren des Indikatorelements dienen. Insbesondere kann vorgesehen sein, dass zumindest ein Teil des Indikatorelements den Anschlag, insbesondere den Anschlagring umgibt. Demgemäss ist zumindest ein Teil des Indikatorelements radial weiter aussen liegend verglichen mit dem Anschlag angeordnet. Beispielsweise kann ein ringförmiges Indikatorelement vorgesehen sein, das den Anschlagring, umgibt. Hierdurch wird einerseits eine besonders kompakte Bauform erhalten, und zugleich ist das Indikatorelement besonders gut einsichtig, so dass die Betriebszuverlässigkeit weiter erhöht ist.

Die Erfindung betrifft auch einen Betonanker, der eine lastanzeigende Scheibe nach der Erfindung aufweist.

Die Erfindung wird nachstehend anhand eines bevorzugten Ausführungsbeispiels näher erläutert, welches schematisch in den beiliegenden Figuren dargestellt ist. Es zeigen schematisch:
- Fig. 1: eine Längsschnittansicht eines Betonanker mit einer erfindungsgemässen lastanzeigenden Scheibe im unbelasteten Zustand; und
- Fig. 2: eine Längsschnittansicht des Betonankers mit der erfindungsgemässen lastanzeigenden Scheibe aus Fig. 1 nach dem Aufbringen einer Vorspannung.

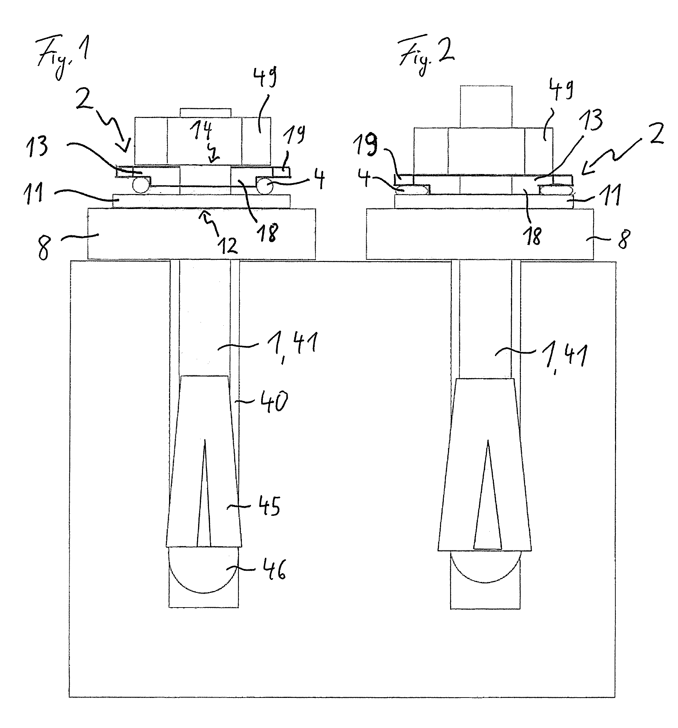

Ein Ausführungsbeispiel eines erfindungsgemässen Betonankers 1, an dem eine erfindungsgemässe lastanzeigende Scheibe 2 angeordnet ist, ist in den Figuren 1 und 2 dargestellt. Der Betonanker 1 weist einen Bolzen 41 auf, der in eine Bohrung 40 eingeführt ist. An seinem fussseitigen, in der Bohrung 40 angeordneten Ende sind am Bolzen 41 eine Spreizhülse 45 sowie ein Spreizkonus 46 für die Spreizhülse 45 angeordnet. Am gegenüberliegenden Ende des Bolzens 41 ist eine Vorspannmutter 49 vorgesehen.

Die erfindungsgemässe lastanzeigende Scheibe 2 ist zwischen der Vorspannmutter 49 und dem zu verankernden Element 8 angeordnet und liegt an der Vorspannmutter 49 an. Die lastanzeigende Scheibe 2 weist einen ringförmigen Grundkörper 11 sowie einen ebenfalls ringförmigen Deckkörper 13 auf, wobei der Deckkörper 13 der Vorspannmutter 49 zugewandt ist, und der Grundkörper dem zu verankernden Element 8 zugewandt ist. Der scheibenförmige Grundkörper 11 und der scheibenförmige Deckkörper 13 weisen jeweils eine Durchgangsöffnung 12 beziehungsweise 14 auf, durch die der Bolzen 41 hindurchgeführt ist.

Am Deckkörper 13 ist ein Anschlagring 18 angeordnet, der axial bezogen auf die Durchgangsöffnungen 12, 14, also in Längsrichtung des Bolzens 41, vom Deckkörper 13 zum Grundkörper 11 hin vorsteht. Dieser Anschlagring 18 begrenzt eine axiale Bewegung des Deckkörpers 13 zum Grundkörper 11 hin.

Zwischen dem Grundkörper 11 und dem Deckkörper 13 ist ein ringförmiges Indikatorelement 4 aus einem dilatanten Material angeordnet, welches den Anschlagring 18 umgibt, und welches im unbelasteten Zustand, der in Fig. 1 dargestellt ist, axial über den Anschlagring 18 übersteht. Im unbelasteten Zustand weist das ringförmige Indikatorelement 4 wie in Fig. 1 gezeigt beispielsweise einen kreisförmigen Querschnitt auf.

Wird die Vorspannmutter 49 nun wie in Figur 2 gezeigt zum Vorspannen des Betonankers 1 angezogen, so werden der Grundkörper 11 und der Deckkörper 13 zwischen der Vorspannmutter 49 und dem zu befestigenden Element 8 axial zusammengedrückt. Dabei wird das zwischen Grundkörper 11 und Deckkörper 13 angeordnete Indikatorelement 4 axial gestaucht. Da die Vorspannung über einen relativ langen Zeitraum anhält, deformiert sich das dilatante Indikatorelement 4 und dehnt sich entsprechend der axialen Stauchung radial aus, so dass es zu einer Abweichung vom kreisförmigen Querschnitt des Indikatorelements 4 kommt (Fig. 2). Diese Verformung kann erfindungsgemäss als Mass für die im Bolzen 41 wirkende Vorspannkraft herangezogen werden. Damit die Verformung des Indikatorelements 4 visuell besonders gut wahrnehmbar ist, kann im Grundkörper 11 und/oder im Deckkörper 13 zumindest ein Sichtfenster vorgesehen sein. Im dargestellten Ausführungsbeispiel ist ein ringförmiges Sichtfenster 19 radial aussen am Deckkörper 13 angeordnet.

Mit zunehmender Vorspannung wird das Indikatorelement 4 so lange weiter deformiert, bis der Anschlagring 18 des Deckkörpers 13 am Grundkörper 11 anschlägt. Der Anschlagring 18 schützt somit das Indikatorelement 4 vor übermässiger Belastung.

Wirken, beispielsweise beim Einhämmern des Bolzens 41 in die Bohrung 40, kurzzeitige Axialkräfte auf die lastanzeigende Scheibe 2, so kommt es aufgrund der dilatanten Eigenschaften des Indikatorelements 4 zu keiner nennenswerten Verformungen des Indikatorelements 4, so dass die Indikatorfunktion des Indikatorelements 4 durch diese Stösse nicht beeinträchtigt wird.

## Patentansprüche

1. Lastanzeigende Scheibe (2) mit
einem Grundkörper (11) und einem auf dem Grundkörper (11) angeordneten Deckkörper (13), und zumindest einem Indikatorelement (4) zum Anzeigen einer zwischen Grundkörper (11) und Deckkörper (13) wirkenden Axialkraft, welches zwischen Grundkörper (11) und Deckkörper (13) angeordnet ist,
**dadurch gekennzeichnet,**
**dass** das Indikatorelement (4) ein dilatantes Material aufweist.

2. Lastanzeigende Scheibe (2) nach Anspruch 1, **dadurch gekennzeichnet, dass** der Grundkörper (11) und der Deckkörper (13) jeweils eine Durchgangsöffnung (12 bzw. 14) aufweisen, wobei die beiden Durchgangsöffnungen (12, 14) für einen axialen Durchgang eines Bolzens (41) miteinander fluchten.

3. Lastanzeigende Scheibe (2) nach einem der vorstehenden Ansprüche, **dadurch gekennzeichnet,**
**dass** das Indikatorelement (4) als Ring ausgebildet ist.

4. Lastanzeigende Scheibe (2) nach einem der vorstehenden Ansprüche, **dadurch gekennzeichnet,**
**dass** der Grundkörper (11) und/oder der Deckkörper (13) eine ringförmige Scheibe aufweist.

5. Lastanzeigende Scheibe (2) nach einem der vorstehenden Ansprüche, **dadurch gekennzeichnet,**
**dass** ein Anschlag vorgesehen ist, der eine axiale Bewegung des Deckkörpers (13) zum Grundkörper (11) hin und eine axiale Belastung des Indikatorelements (4) begrenzt.

6. Lastanzeigende Scheibe (2) nach Anspruch 5, **dadurch gekennzeichnet,**
**dass** der Anschlag durch einen Anschlagring (18) gebildet wird, der vom Grundkörper (11) oder vom Deckkörper (13) axial vorsteht.

7. Lastanzeigende Scheibe (2) nach einem der Ansprüche 5 oder 6, **dadurch gekennzeichnet, dass** zumindest ein Teil des Indikatorelements (4) den Anschlag umgibt.

8. Betonanker (1), **dadurch gekennzeichnet, dass** er eine lastanzeigende Scheibe (2) nach einem der vorstehenden Ansprüche aufweist.

## Claims

1. A load-indicating washer (2) comprising:
a base element (11) and a cover element (13) placed on said base element (11),
and at least one indicator element (4) for indicating an axial force acting between base element (11) and cover element (13), said indicator element (4) being placed between base element (11) and cover element (13),
**characterized in that**
the indicator element (4) consists of a dilatant Material.

2. A load-indicating washer (2) according to Claim 1,
**characterized in that**
the base element (11) and the cover element (13) each have a through opening (12 and 14 respectively), the two through openings (12, 14) being aligned with one another to allow for the axial passage of a bolt (41).

3. A load-indicating washer (2) according to one of the preceding claims,
**characterized in that**
the indicator element (4) takes the fonn of a ring.

4. A load-indicating washer (2) according to one of the preceding claims,
**characterized in that**
the base element (11) and/or the cover element (13) comprise/s an annular disc.

5. A load-indicating washer (2) according to one of the preceding claims,
**characterized in that**
a limit stop is provided, which restricts an axial movement of the cover element (13) towards the base element (11) as well as restricting an axial loading of the indicator element (4).

6. A load-indicating washer (2) according to Claim 5,
**characterized in that**
the limit stop is formed by a stop ring (18) which projects in axial direction from the base element (11) or from the cover element (13).

7. A load-indicating washer (2) according to one of Claims 5 or 6,
**characterized in that**
at least a part of the indicator element (4) surrounds the limit stop.

8. A concrete anchor (1),
**characterized in that**
it includes a load-indicating washer (2) according to one of the preceding claims.

## Revendications

1. Rondelle indicatrice de charge (2) comportant :
un corps de base (11) et un corps de recouvrement (13) agencé sur le corps de base (11), et au moins un élément indicateur (4) pour indiquer une force axiale agissant entre le corps de base (11) et le corps de recouvrement (13), lequel élément indicateur est agencé entre le corps de base (11) et le corps de recouvrement (13),
**caractérisée en ce que** l'élément indicateur (4) comporte un matériau dilatant.

2. Rondelle indicatrice de charge (2) selon la revendication 1, **caractérisée en ce que** le corps de base (11) et le corps de recouvrement (13) comportent chacun une ouverture traversante (12 resp. 14), dans lequel les deux ouvertures traversantes (12, 14) affleurent l'une l'autre pour un passage axial d'un boulon (41).

3. Rondelle indicatrice de charge (2) selon l'une des revendications précédentes, **caractérisée en ce que** l'élément indicateur (4) est réalisé sous la forme d'une bague.

4. Rondelle indicatrice de charge (2) selon l'une des revendications précédentes, **caractérisée en ce que** le corps de base (11) et/ou le corps de recouvrement (13) comporte un disque annulaire.

5. Rondelle indicatrice de charge (2) selon l'une des revendications précédentes, **caractérisée en ce qu'**une butée est prévue pour limiter un mouvement axial du corps de recouvrement (13) par rapport au corps de base (11), et une charge axiale de l'élément indicateur (4).

6. Rondelle indicatrice de charge (2) selon la revendication 5, **caractérisée en ce que** la butée est formée par une bague de butée (18) qui fait axialement saillie à partir du corps de base (11) ou du corps de recouvrement (13).

7. Rondelle indicatrice de charge (2) selon l'une des revendications 5 ou 6, **caractérisée en ce qu'**au moins une partie de l'élément indicateur (4) entoure la butée.

8. Ancrage en béton z}, **caractérisé en ce qu'**il comporte une rondelle indicatrice de charge (2) selon l'une des revendications précédentes.
